# EUROPEAN PATENT APPLICATION

(11) **EP 2 306 417 A1**
(43) Date of publication of application: **06.04.2011**
(21) Application number: 09425370.5
(22) Date of filing: 25.09.2009
(51) Int. Cl.: G07F 13/06, A47J 31/36

(54) **Cartridge magazine**

(71) Applicant: F.A.S. International S.p.A., 36015 Schio (Vicenza) (IT)
(72) Inventor: Morabito, Giuseppe, 36014 Santorso (VI) (IT)
(74) Representative: Fiorani, Giuseppe

(57) **Abstract**

The present invention concerns a cartridge magazine for single dose cartridges to be used in automatic beverage dispensers, in which the cartridge magazine comprises at least one seat, extending along a longitudinal axis and defined by a cylindrical wall, inside of which it is possible to stack a plurality of cartridges, a device for dispensing a cartridge to a beverage preparation unit, in which the continuity of the wall which defines the seat is interrupted by a slit which places the inside of the seat in communication with the outside of the seat.

## Description

The present invention refers to a cartridge magazine for automatic dispensers, in particular for an automatic dispenser of hot beverages prepared from a single dose cartridge.

Automatic dispensers of hot beverages are known, for example, from patent application EP 07425356, in which the inner structure of an automatic dispenser of hot beverages, is published. Such a dispenser collects a dose of product from an appropriate magazine, in which many doses of product are contained, in the form of instant powder or powder for preparing an infusion. However, for the sake of hygiene, practicality and to guarantee the aroma of the product, in some cases it has become accepted practice to prepare beverages from cartridges (rigid or non rigid) containing a quantity of powder (be it for infusion, or instant powder) which is sufficient to prepare a single dose of beverage.

In this type of dispenser, the cartridge is collected from a cartridge magazine and brought through gravity, or in another way, into an infusion chamber, generally made by bringing together two suitably shaped elements which are able to hold the cartridge in a water-tight manner.

At this point, the powder contained in the cartridge is mixed with water, possibly by perforating the cartridge itself, and the beverage thus prepared is then dispensed by the dispenser.

It is clear that this system ensures a greater certainty with regard to the quantity of powder actually used for preparing the beverage, as well as a greater hygiene and a better maintenance of the aroma of the beverage.

With the popularity of large capacity automatic dispensers (that is, not designed for domestic use), a need has thus arisen to make systems which are flexible, rapid and fast to store and dispense the cartridges.

In view of the described state of the art, the purpose of the present invention is to provide a new cartridge magazine which satisfies the aforementioned requirements.

In accordance with the present invention, such a purpose is obtained with a cartridge magazine for automatic dispensers according to claim 1.

The characteristics and the advantages of the present invention shall become clear from the following detailed description of a practical embodiment, given as an example and not for limiting purposes with reference to the attached drawing, in which:
- figure 1 shows a perspective view of a preferred embodiment of the present invention;

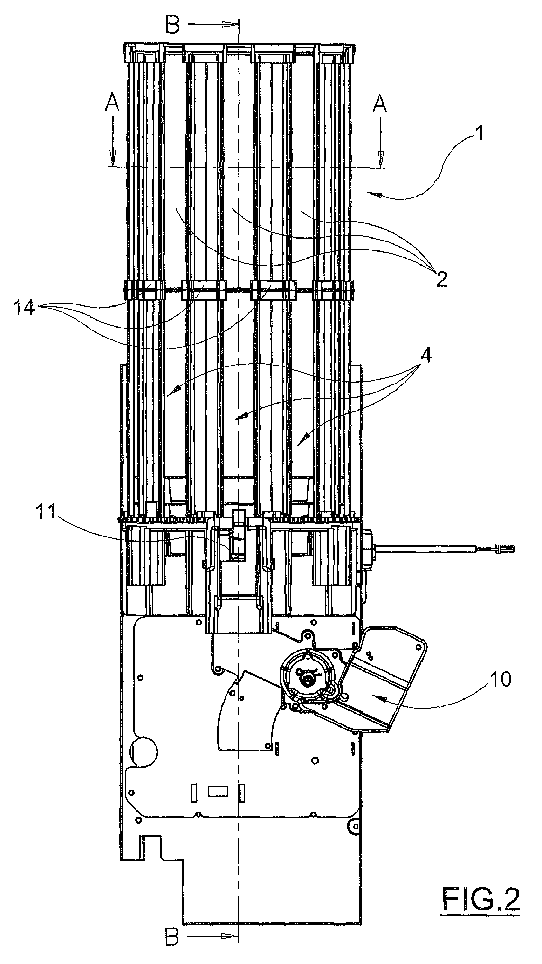

- figure 2 shows a front view of the cartridge magazine of figure 1;

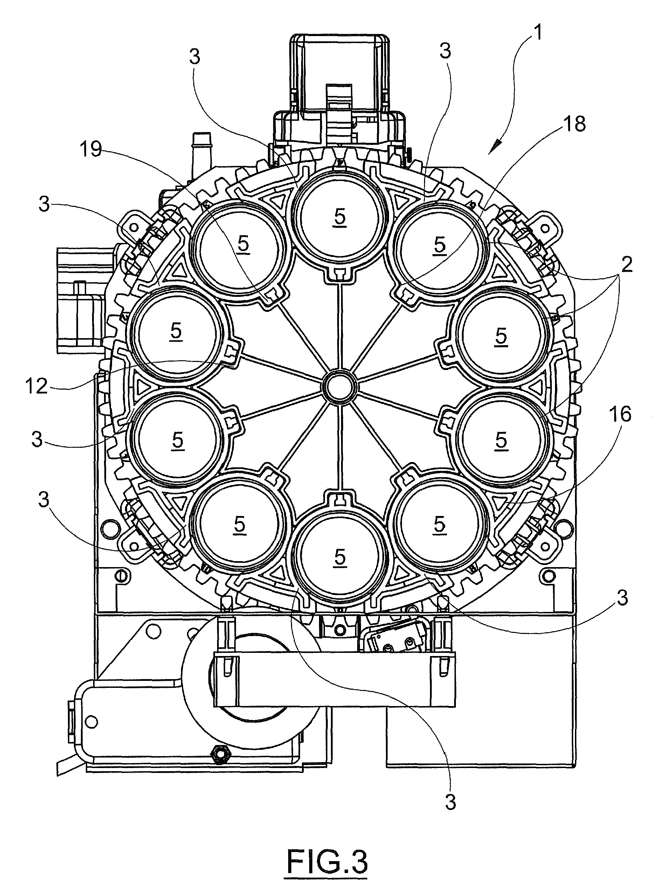

- figure 3 shows the A-A cross-section of the cartridge magazine of figure 2, but with some cartridges inside;

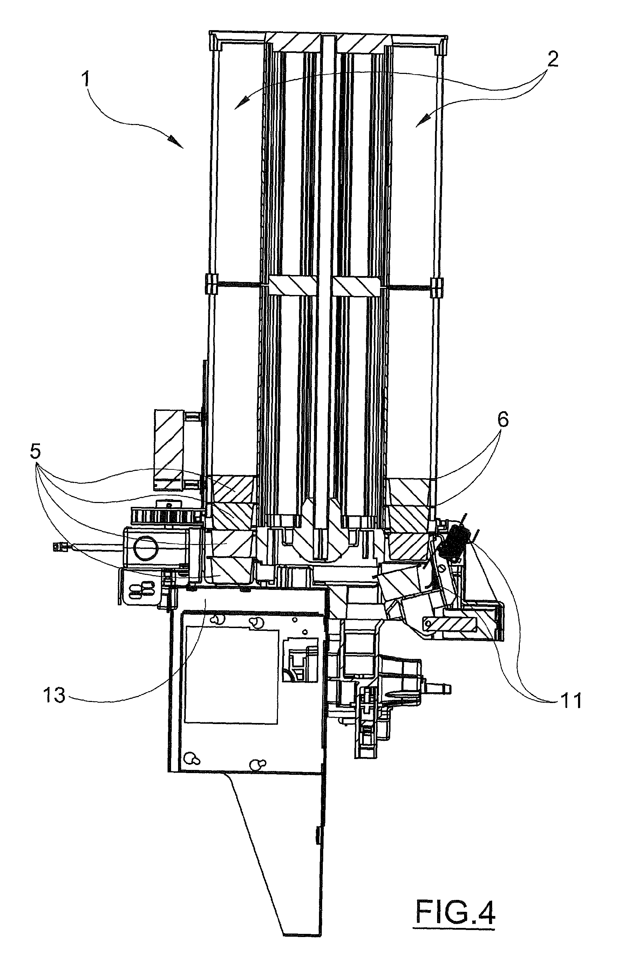

- figure 4 shows the B-B cross-section of the cartridge magazine of figure 2;
- figure 5 shows a further transverse cross-section of the cartridge magazine of figure 2.

The magazine 1 represented in the figures has been conceived for use inside automatic dispensers. It is completely arranged inside the automatic dispensers in which it is installed.

In this sense, the present invention does not refer to automatic dispensers in which the magazine is partially outside the frame of the dispenser itself (considered without the magazine).

As can be seen in the figures, the magazine 1 comprises a plurality of substantially cylindrical seats 2, each defined by a wall 3.

There can be four, five, six, eight, ten, twelve or more of the seats 2 depending on the size of the magazine 1 and on the contingent needs and they can be arranged along an ideal circumference or even along many concentric circumferences.

With reference to a single seat 2, the wall 3 which defines it is substantially cylindrical, preferably having the shape of an incomplete cylinder.

With reference to the figures, it is possible to see that the continuity of each wall 3 is interrupted by a slit 4, which puts the inside of the seat 2 (considered as ideally having a perfectly cylindrical shape) in communication with the outside of the seat 2 itself.

The slit 4 has an extension which is equal to at least 10% the length of the wall 3, preferably at least 15%, preferably not more than 35%, preferably not more than 25% and/or preferably about 20%.

Inside each seat 2, one or more cartridges 5 can be loaded, each containing a single dose of powder necessary to prepare a beverage.

As visible in the figures, cartridges 5 can be of the rigid type, advantageously comprising a cup-shaped portion, closed by a flat portion which further defines flange 6 of cartridge 5, which can be used for moving it.

Alternatively, however, it can be conceived to use magazine 1 according to the present invention for cartridges the flange of which is arranged at about mid height, like for example the flexible cartridges (not represented in the figures).

Since it can be difficult to refill with cartridges magazines comprising cylindrical seats having a non negligible axial extension (i.e., relationship length/diameter), the present magazine 1 allows a much easier loading, without requiring to use previously filled cylinders.

Cartridges 5 can indeed be stacked together, even before being sold.

In this case, it is possible that, during the operation of the automatic dispenser, some cartridges incline with respect to their normal stacked position, creating dispensing problems and problems of operation of the dispenser.

The presence of slit 4, as should be clear, makes it possible both to reduce the risk of cartridges inclining, and to increase the speed and the simplicity of resetting the correct position by a worker during normal maintenance of the dispenser.

Advantageously, slit 4 extends in a rectilinear manner, for example parallel to the longitudinal axis of each seat 2, for example, the length of slit 4 is equal or almost equal to the height of seat 2 itself. In accordance with a preferred embodiment of the present invention, in use, the axis of each seat 2 and of each slit 4 are vertical.

As visible in the figures, slits 4 are arranged on the extension of the radius which starts at the centre of the circumference along which seats 2 are arranged and that passes through the centre (the axis) of each seat 2. Advantageously, slits 4 are centred with respect to such a radius, so as to have an overall radial symmetry.

However, it is clear that the radial symmetry is not necessary to obtain the aforementioned technical effect, but that it is sufficient for the slits to be able to be accessed from outside of the cartridge magazine.

The walls 3 are advantageously made by one or more elements 7 having a substantially cylindrical shape or rather, incomplete cylindrical shape (interrupted, precisely, by slit 4).

The elements 7 advantageously have all the same diameter of the seat 2 they define. It is therefore possible for the seats 2 to all have the same diameter (and thus all elements 7 which define walls 3 shall have the same inner diameter), or for seats 2 to have different diameters (and therefore elements 7 will have different inner diameters, each diameter being specific to its seat 2).

In other words, elements 7 can be stacked to define seats 2 having a greater height, so as to make a modular structure.

The seats 2 (and therefore elements 7) are fixedly connected to a mobile frame 8, which can comprise an base 9, advantageously circular. The mobile frame 8 is able to set seats 2 in motion, shifting them, one at a time, selectively, so that a seat 2 is located by a device 10 for dispensing cartridges 5.

In this way, cartridge 5 can be collected from the seat 2 in which it is and conveyed to a beverage preparation unit (not shown in the figures).

Advantageously, cartridge 5 can be collected from seat 2 by gravity, i.e., cartridge 5 is dropped out from the lower end of seat 2.

Conveniently, the lower ends of seats 2 are normally closed, so that cartridges 5 contained therein are supported.

The device 10 for dispensing cartridges 5, however, comprises an element 11, for example a mobile tooth, which selectively closes the lower end of one of the seats 2, at least enough to prevent the cartridges 5 present in seat 2 itself, from falling.

In this way, when device 10 is actuated, element 11 lets a cartridge 5 fall, advantageously the lowermost cartridge, holding the others in seat 2.

For example, mobile frame 8 can be a rotary frame, which selectively moves seats 2 in a predetermined angular position, in which the lower end of seat 2 is closed by device 10 for dispensing cartridges 5. Advantageously, therefore, seats 2 are arranged so that their mid point is aligned along a circumference.

According to the embodiment represented in the figures, the rotary frame comprises a star-shaped structure 12, actuated by suitable motor means, which, coupled with the incomplete cylindrical elements 7 through shape coupling, allows seats 2 to rotate around the central axis of the rotary frame.

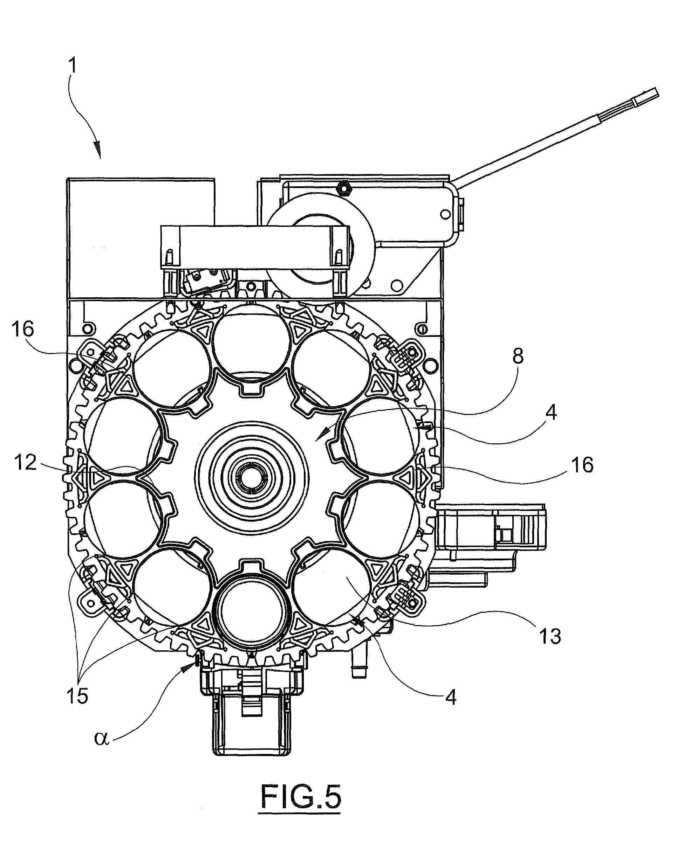

A plate 13 supports cartridges 5 in every angular position except for the position α, visible in figure 5, in which cartridges 5 are supported by dispensing device 10.

The cartridges 5 arranged at the bottom will thus slide on plate 13, which stops them from falling; plate 13 will thus be interrupted by dispensing device 10.

In order to allow shape coupling between cylindrical elements 7 and mobile frame 8, according to a preferred embodiment, first attachment elements 14 are foreseen, which join together two adjacent cylindrical elements 7, through the consecutive free edges 15 of two adjacent slits 4. Advantageously, first attachment elements 14 can be arranged at the upper ends and/or lower ends of cylindrical elements 7.

A stiffening element 16 can be present between two adjacent cylindrical elements 7 and a first attachment element 14.

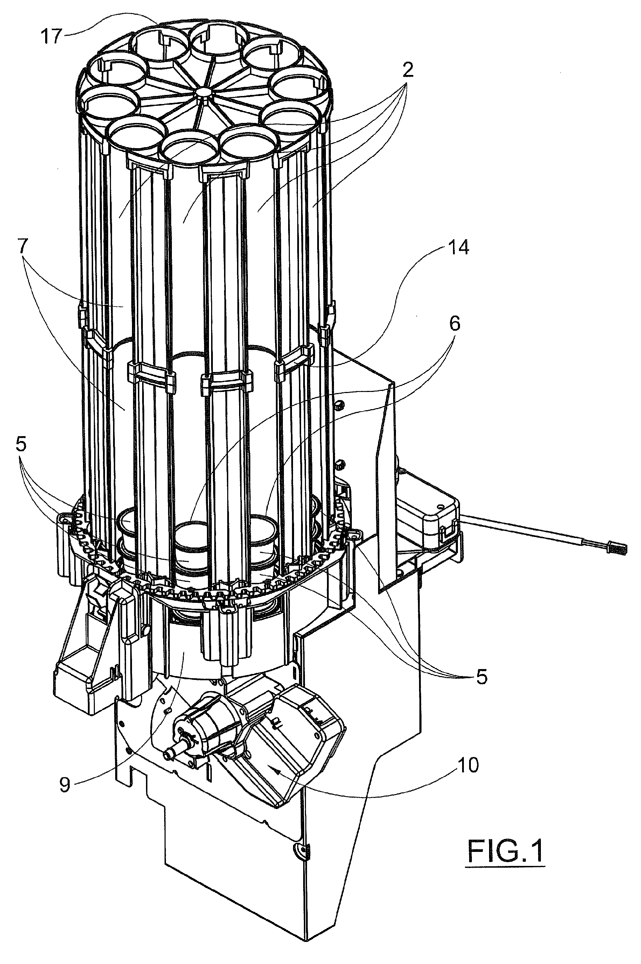

Optionally, the magazine can comprise one or more second attachment elements 17 comprising a complete circular portion arranged at the upper end of at least one seat 2 and/or of at least one cylindrical element 7. Preferably, the second attachment element(s) 17 comprise a complete circular portion arranged at the upper end of each seat 2, as shown in figure 1, and/or of each cylindrical element 7.

Advantageously, star structure 12 comprises longitudinal seats 18, foreseen to guide insertion of cylindrical elements 7, which can advantageously comprise corresponding longitudinal projections 19.

Of course, even though the present description has been made in relation to a modular embodiment of mobile frame 8 and of seats 2, an integral structure or one that comprises elements which are welded and/or glued to each other and/or which are subdivided into a greater or lower number of elements should be considered technically equivalent to the embodiment represented.

According to a preferred embodiment, the outer edge of plate 13 is substantially circular; the outer edge can possibly be interrupted at the position α, in which plate 13 must comprise an opening to allow cartridge 5 to fall.

As can be seen in figure 5, free edge 15 of cylindrical elements 7 is substantially by the outer edge of plate 13.

Of course, a man skilled in the art, in order to satisfy contingent and specific requirements, can carry out numerous modifications and variants to the aforementioned configurations, all covered by the scope of protection of the invention as defined in the following claims.

## Claims

1. Cartridge magazine (1) for single dose cartridges (5) to be used in automatic beverage dispensers, said magazine (1) comprising:
- at least one seat (2), extending along a longitudinal axis (X-X), in which a plurality of said cartridges (5) can be stacked;
- a dispensing device (10), for dispensing one of said cartridges (5) out from said seat (2) to a beverage preparation unit;
- said seat (2) being defined by a substantially cylindrical wall (3);
**characterized in that**
the continuity of said wall (3) is interrupted by a slit (4) which puts the inside of said seat (2), considered as being ideally cylindrical, in communication with the outside of said seat (2).

2. Magazine (1) according to the previous claim, wherein said slit (4) is parallel to said longitudinal axis (X-X).

3. Magazine (1) according to any one of the previous claims, wherein said slit (4) substantially extends along the entire height of said seat (2).

4. Magazine (1) according to any one of the previous claims, wherein said slit (4) extends along the periphery of said wall (3) for at least 10% of the length of said wall (3), preferably at least 15%, preferably not more than 35%, preferably not more than 25% and/or preferably about 20%.

5. Magazine (1) according to any one of the previous claims, comprising a mobile frame (8) suitable for selectively moving each one of said seats (2) to said dispensing device (10).

6. Magazine (1) according to any one of the previous claims, wherein the centre point of said seats (2) are arranged along a circumference.

7. Magazine (1) according to any one of the previous claims, wherein said slits (4) are arranged radially outwards of said magazine (1).

8. Magazine according to any one of the previous claims, wherein said walls (3) are coupled with said mobile frame (8) and said mobile frame (8) is a rotary frame.
